# FASCICULE DE BREVET EUROPEEN

(11) **EP 1 493 804 B1**
(45) Date de publication et mention de la délivrance du brevet: **24.05.2006**
(21) Numéro de dépôt: 04291623.9
(22) Date de dépôt: 28.06.2004
(51) Int. Cl.: C12F 3/06, F16K 33/00

(54) **Dispositif de séparation automatique des jus et des matières solides en vrac dans une benne en vue du transport**
Vorrichtung zum automatischen Trennen von Flüssigkeiten und Schüttgut in einem Transportkübel
Device for the automatic separation of liquid and solid bulk material in a wagon

(30) Priorité: 30.06.2003 FR 0307919; 14.04.2004 FR 0403966
(43) Date de publication de la demande: 05.01.2005
(73) Titulaire: Perchat, Alain, 51530 Pierry (FR)
(72) Inventeur: Perchat, Alain, 51530 Pierry (FR)

(56) Documents cités:
- FR-A- 1 587 547
- FR-A- 2 112 674
- FR-A- 2 596 411
- FR-A- 2 767 530

## Description

Le domaine technique de la présente invention est celui des conteneurs de stockage ou de transport par tout type de transport, de déchets divers et de marchandises pour lesquels un écoulement incontrôlé de liquide présente un risque pour l'environnement, nécessitant un transport spécialisé, et/ou une filtration des matières, permettant de contenir les liquides dans une cuve formant un bac de rétention hautement sécurisé, tandis que la dite cuve peut présenter une inclinaison relativement importante, sans perte de liquide.

Plus particulièrement, l'invention concerne une cuve étanche destinée à être installée dans une benne comportant des moyens de séparation et de filtration des matières solides et des liquides, de transfert automatique des liquides contenus dans la cuve, formant un bac de rétention étanche, installée sur le plancher d'une benne destinée au transport en vrac de matière ayant tendance à foisonner telle que, mais non exclusivement des marcs de raisins, des végétaux divers, des boues, ou tout autre produit pour lequel un transport propre, de matière éventuellement polluante doit être assuré. Le dispositif est également à usage de bac de rétention pour le transport dans des récipients, de tout produit corrosif nocif ou dangereux présentant un risque pour l'environnement, et pour lequel toute fuite de liquide doit être maîtrisée notamment durant le transport.

De tel conteneur sont par exemple utilisé pour collecter les sous produits résultants du pressurage des raisins, puis de les transporter en destination de la distillerie.

L'opération de pressurage des raisins laisse des sous produits, pulpe, rafle et pépins ; ces sous produits sont communément appelés marcs de raisins. La réglementation fait obligation aux viticulteurs de les collecter et de les envoyer en distillerie. Les marcs sont encore chargés en jus, et au cours du transport, il se produit un tassement des matières solides, le jus remonte à la surface; il se produit en quelque sorte un foisonnement de la matière, d'autant plus important que le trajet entre le pressoir et la distillerie est important. Afin de préserver l'environnement, il est bon d'éviter les fuites diverses, sur les routes et vers les égouts, sinon les stations d'épuration communales, deviennent inopérantes au bout de quelques jours. De plus, lorsque des pluies surviennent, ces jus se trouvent emportés vers les points d'eau, les nappes phréatiques et les rivières, engendrant des pollutions qui peuvent être localement importantes. En effet, la dégradation de ces sous produits, riches en matières organiques, se fait avec une importante consommation d'oxygène; ainsi le taux d'oxygène des rivières baisse dangereusement, provoquant l'asphyxie de la faune piscicole.

Différents moyens de collecte sont actuellement mis en oeuvre pour reprendre les marcs, et diminuer la pollution engendrée par l'activité de pressurage. De manière classique, les marcs de raisins après le pressurage, sont chargés dans des bennes mobiles d'environ 15 M3 munies de portes à l'arrière; non étanche, la benne est reprise à l'aide d'une flèche hydraulique pour être chargée sur un camion, la benne se trouve alors dans une position oblique, ce qui crée un afflux de liquide vers les portes, il s'écoule une quantité importante de jus que l'on peut évaluer entre vingt et cinquante litres suivant les critères de l'année, et ceci à chaque manoeuvre de reprise de la benne. De plus lors du trajet, les matières solides se tassent, le volume de jus augmente, ce qui occasionne des écoulements tout au long du trajet routier.

Une autre technique consiste à aménager des plate formes en béton sur lesquelles les marcs de raisins sont stockés, les jus d'auto écoulement sont alors recueillis par gravité dans des cuves de réception placées sous ces aires cimentées. En fait cette solution présente divers inconvénients; en effet, les marcs de raisins s'égouttent de façon statique, et cela n'empêche pas ensuite le foisonnement des matières solides dans la benne, de sorte qu'au cours du trajet, des jus s'écoulent de la benne. De plus, ces plate formes peuvent être l'objet de pollution olfactive, et en outre elles représentent un investissement relativement important.

Une autre technique consiste après avoir extrait les jus destinés à la vinification, à réaliser sur un second pressoir à haute pression, un pressurage plus serré, en sorte de sécher les marcs. Ce procédé est efficace, mais les coûts d'investissement sont assez élevés, et ce procédé ne peut pas être réalisé pour une unité de pressurage moyenne ou petite.

Le dispositif pour le transport de matière à la fois solide et liquide selon l'invention consiste préférentiellement en une cuve étanche amovible, mais pouvant être fixe, formant un bac de rétention de préférence métallique, présentant une gaine technique étanche, longitudinale définissant deux caissons communiquant entre eux, en tête et en arrière de la cuve, la dite gaine technique étant traversée par un tuyau de collecte des liquides, débouchant vers la tête de la benne. Les caissons sont équipés préférentiellement, mais non exclusivement, de trois moyens de filtration étanche avec la cuve, présentant un filtre, une goulotte de réception des liquides reliée à un tuyau comportant un moyen d'obturation formé d'un clapet jumelé d'un flotteur en sorte d'éviter tout retour de liquide vers la benne, notamment lorsque celle ci est dans une position inclinée.

L'invention concerne également différents modes de réalisation de la cuve comme par exemple l'équipement lors de la fabrication d'une benne, dans un double fond supérieur solidarisé par soudure du double fond contre les parois de la benne, en sorte de former la cuve.

Selon une caractéristique additionnelle, du dispositif selon l'invention, le boîtier de filtration chevauche les deux caissons, l'étanchéité avec la cuve étant assurée par soudure, ou autre technique analogue.

Selon une autre caractéristique additionnelle du dispositif selon l'invention, la gaine technique présente intérieurement des renforts solidarisés au plancher et plafond de la cuve, la dite gaine étant traversée par un tuyau d'écoulement des liquides débouchant suivant une pente négative vers la partie avant de la cuve, de sorte que lors du chargement de la benne sur un camion, l'inclinaison donnée à la benne permette que l'embouchure du tuyau ne soit plus en contact avec le liquide, empêchant tout retour de liquide vers la benne proprement dite.

Selon une autre caractéristique additionnelle du dispositif selon l'invention, le moyen de filtration consiste en une grille perforée posée sur une goulotte de collecte des liquides reliée au tuyau d'écoulement, tandis qu'au dessus de la dite grille un profilé convexe solidarisé à la cuve laisse subsister des espaces en forme d'arches, permettant le drainage des liquides tout en maintenant à l'écart de la grille les matières solides.

Selon une autre caractéristique additionnelle du dispositif selon l'invention, le point bas de la goulotte présente une bouche reliée à un tuyau d'écoulement comportant un moyen d'obturation formé d'un clapet jumelé d'un flotteur apte à fermer la dite bouche d'écoulement et empêcher tout retour de liquide vers les matières solides stockées dans la benne.

Selon une autre caractéristique additionnelle du dispositif selon l'invention, la cuve est réalisée par pliage et par soudure ou tout autre moyen capable d'en assurer l'étanchéité, tandis qu'entre le plancher et le plafond de la cuve des renforts alvéolés renforcent la structure tout en autorisant les flux.

Selon une autre caractéristique additionnelle du dispositif selon l'invention, la cuve présente sur le coté à l'arrière de la cuve, une consolé en porte-à-faux prolongeant le plafond de la cuve, créant un espace technique protégeant au moins une bouche horizontale de décharge équipée de vanne, tandis que sur la largeur opposée, la dite cuve présente un évent en élévation verticale (non représenté) vissé sur une bouche, de manière à favoriser un écoulement rapide des liquides lors des opérations de vidange ou de pompage et de faciliter le nettoyage en circuit fermé à l'aide d'une pompe.

Selon une autre caractéristique additionnelle du dispositif selon l'invention, le plafond de la cuve présente en son pourtour, des moyens d'étanchéité en oblique formés par des volets ajustables latéralement au moyen de trous oblongues, contre les parois de la benne, les dits volets étant solidarisés à la dite cuve par des vis et des boulons. Les volets comportent en complément, des joints d'étanchéité du type caoutchouc ou autre joint similaire venant prendre appui sur les parois de la benne. La cuve, de forme et de dimensions sensiblement inférieures à la benne à équiper est ensuite disposée et fixée de façon classique sur le plancher d'une benne par des boulons ou tout autre moyen de fixation.

Selon une autre caractéristique additionnelle du dispositif selon l'invention, l'une des parois latérales de la cuve présente des moyens d'aide à la mise en place par glissement de la cuve dans une benne consistant en des moyens de guide permettant de réduire les frottements, telles des billes, des rouleaux ou des patins à faible frottement.

Selon un mode de réalisation particulier du dispositif selon l'invention, celui ci est formé d'une cuve fixe adaptée à l'intérieur d'une benne au cours de la fabrication, le plafond de la cuve est alors soudé contre les parois de la benne. Le dispositif étant installé à demeure, la benne de transport de produits mi liquide mi solide est alors exclusivement réservée à cet usage.

Selon un autre mode de réalisation particulier du dispositif selon l'invention, le plafond de la cuve forme une sorte d'entonnoir, notamment d'avant en arrière de la dite cuve, tandis qu'un seul boîtier de filtration est disposé sensiblement au milieu de la cuve.

Selon un autre mode de réalisation particulier du dispositif selon l'invention, la cuve présente un ensemble de deux enveloppes étanches espacées l'une de l'autre par des entretoises définissant une double étanchéité en sorte de former un bac de rétention hautement sécurisé destiné à transporter des contenants de produit dangereux ou corrosif.

Selon un autre mode de réalisation particulier du dispositif selon l'invention, le moyen d'obturation peut comporter un clapet jumelé d'un flotteur, et/ou une électrovanne (connu) commandée à la demande par l'opérateur, en vue de répondre à des situations particulières de chargement, ou autre condition spéciale, en sorte d'obtenir une totale herméticité à un moment précis.

Les avantages résultants de la présente invention consistent en ce qu'il est possible de transporter des matières à la fois solides et liquides dans la même benne, sans avoir de perte de liquide au cours du chargement et/ou du transport qu'il soit par terre, par chemin de fer ou encore par mer, grâce à des moyens de filtration de la matière, des moyens de stockage, permettant de contenir les liquides à l'intérieur de la dite cuve, même lorsque la benne présente une forte inclinaison, notamment lors du chargement sur un camion.

Les avantages et les caractéristiques du dispositif selon l'invention, ressortiront plus clairement de la description qui suit et qui se rapporte au dessin annexé, lequel en représente un mode de réalisation non limitatif.

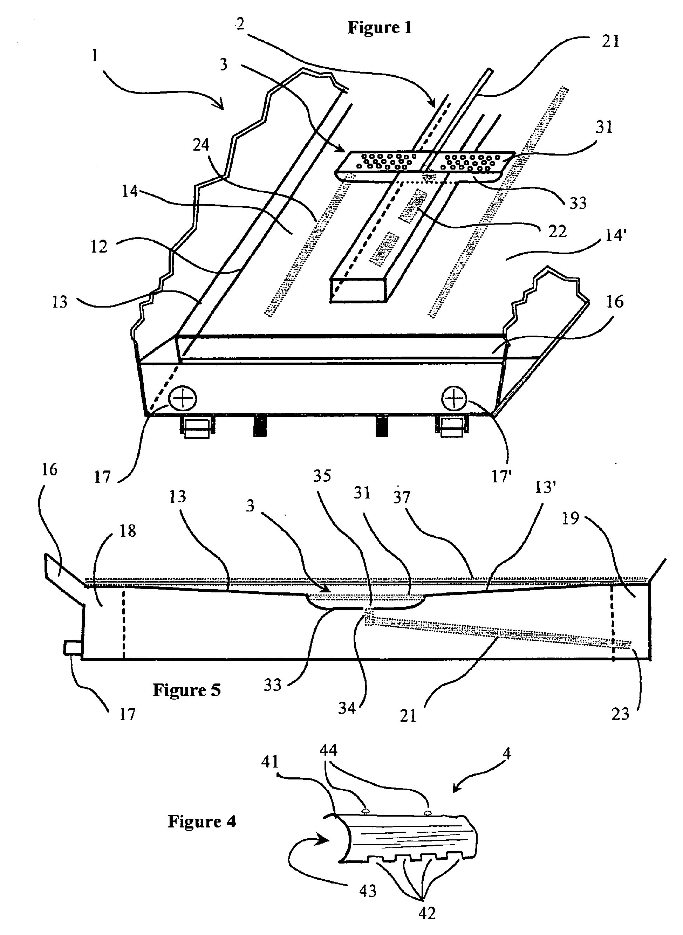

La figure 1 représente une vue schématique partielle en perspective d'une benne, équipée d'un dispositif formant une cuve avec le plancher de la dite benne présentant longitudinalement la gaine technique.
La figure 2 représente une vue schématique de dessus.
La figure 3 représente une vue schématique de coté et en coupe de la cuve, ou l'on remarquera une première enveloppe étanche ( 26) doublée d'une seconde enveloppe également étanche ( 26') séparée par des entretoises ( 25).
La figure 4 , représente une vue schématique d'un profilé de couverture de la grille de filtration.
La figure 5 , représente une vue schématique d'un mode de réalisation particulier du dispositif en vue de coté ou l'on peut voir une cuve comportant un moyen de filtration ( 3), une goulotte ( 33), un plafond formé de deux plans inclinés ( 13 , 13') convergents vers la goulotte, tandis qu'au dessus un plancher filtrant réalisé en caillebotis ( 37), permet de stocker des produits dangereux ou des produits corrosifs, formant un bac de rétention présentant une sécurité optimale.

En référence à ces figures, on peut voir un dispositif de séparation et de collecte des liquides pour toute matière solide et liquide selon l'invention, adapté sur une benne mobile, sachant que d'autres configurations sont réalisables, consistant en une cuve étanche ( 1) de préférence métallique, constituée par exemple, mais non exclusivement de tôle en acier inoxydable, présentant au centre longitudinalement une gaine technique ( 2) comportant des renforts ( 22 , 24) entre le plancher ( 12) et le plafond ( 13) de la cuve, définissant deux caissons longitudinaux ( 14 , 14') communiquant en chacune de leur extrémité de la cuve, tandis que sur le plafond ( 13), les moyens de filtration ( 3) étanches avec la cuve permettent de recueillir les liquides.

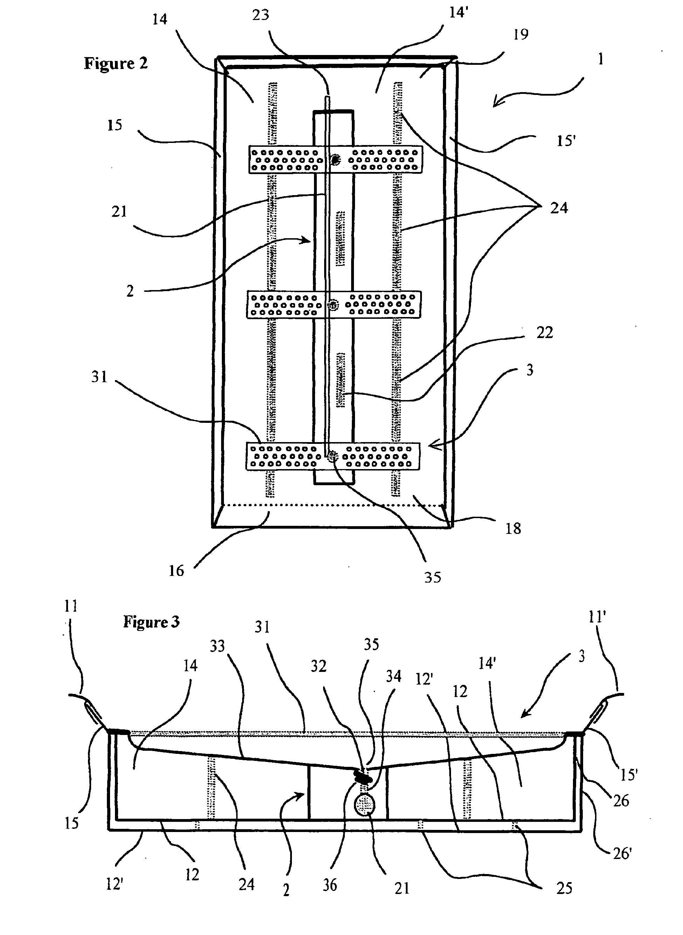

En référence aux figure 2 et 3 on peut voir, trois moyens de filtration ( 3) disposés transversalement dans la largeur et répartis sur la longueur de la benne apte à drainer les liquides et à les diriger vers la goulotte ( 33), la grille amovible ( 31) présente un ensemble de perforations assurant le drainage des liquides par gravité. Au point bas de la goulotte ( 33) on trouve une bouche ( 35) dont l'ouverture est contrôlée par un moyen d'obturation ( 32) formé d'un clapet jumelé d'un flotteur ( 36) de densité inférieur au liquide contenu dans la cuve, préférentiellement installé sur le tuyau de jonction (34) mais pouvant également être disposé et/ou sur le tuyau d'écoulement ( 21), en sorte d'autoriser les flux de liquide principalement dans une seule direction.

Les différents moyens de filtration ( 3) sont réunis entre eux, dans la gaine technique ( 2), par le tuyau d'écoulement ( 21) de pente négative allant de la partie arrière ( 18) à la partie avant ( 19), l'ouverture ( 23) débouchant à la partie avant de la cuve, tandis que la gaine technique ( 2) étanche forme au moins partiellement deux caissons longitudinaux ( 14 , 14') communiquant entre eux dans la partie avant ( 19) et dans la partie arrière (18) de la cuve, présentant des renforts de préférence alvéolés ( 22 , 24), solidarisés verticalement entre l'enveloppe de plancher ( 12) et le plafond ( 13) de la dite cuve, permettant les flux.

Les volets en position oblique ( 15, 15') sur le pourtour du plafond de la cuve, sont ajustable latéralement par glissement dans des trous oblongues (non représenté) et fixé par des boulons sur le dit plafond , en sorte de faciliter l'installation de la cuve dans la benne par une réduction de l'encombrement, tandis qu'un joint à lèvre ( 11, 11') positionné sur le bord extérieur du dit volet assure l'étanchéité avec la paroi de la benne.

On peut voir figure 3 un moyen de filtration avec la grille ( 31) , la goulotte de collecte ( 33) , le moyen d'obturation ( 32) comportant le clapet jumelé du flotteur ( 36), le tuyau de jonction ( 34) et le tuyau de conduite (21 ) des liquides à l'avant de la cuve, tandis que la cuve est formée d'une première enveloppe étanche (12 ) doublée d'une seconde enveloppe également étanche ( 12' ), les deux enveloppes étant solidarisées entre elles par des entretoises ( 25).

On peut voir (figure 4 ), un moyen de drainage constitué d'un profilé de couverture ( 4) de préférence métallique de forme sensiblement convexe ( 41) destiné à être fixé au dessus de la grille ( 31) et sensiblement parallèle à celle ci, comportant des arches ouvertes ( 42) sur le bord longitudinal aval, définissant un espace de drainage des jus ( 43), tout en le préservant du colmatage par les matières solides, tandis que la plaque ( 4) est maintenue en place sur la grille ( 31), par un moyen mâle (44) encliqueter sur la dite grille comprenant des formes sensiblement complémentaires (non représenté), apte à s'encliqueter l'une dans l'autre.

L'on comprendra que les liquides s'infiltrant à travers les perforations de la grille ( 31), sont collectés dans la goulotte ( 33) sensiblement en forme d'entonnoir, s'écoulent dans la bouche ( 35), puis sont conduits par le tuyau d'écoulement ( 21) vers la partie ( 19) en tête de la cuve. L'on comprendra aisément que la gaine technique ( 2) par le tuyau ( 21) et les moyens de filtration ( 3) étanches avec la cuve, permettent d'isoler totalement les liquides de la cuve des liquides contenus dans la benne, lors des opérations de chargement par exemple sur le plateau d'un camion, la benne amovible se trouvant en position inclinée, les liquides contenus dans le tuyau d'écoulement( 21) exercent une poussée verticale faisant remonter le moyen d'obturation ( 32) venant fermer la bouche ( 35) empêchant ainsi le retour des liquides vers la matière solide stockée dans la dite benne. L'on notera que la position de l'ouverture ( 23) du tuyau en avant de la cuve ( 19) empêche également ce retour des liquides dans la benne.

Ceci est particulièrement avantageux et permet de lever la benne suivant une forte inclinaison sans occasionner de reflux des liquides stockés dans la cuve.

L'on remarquera l'arrière de la cuve présentant en porte-à-faux, une console en oblique ( 16) protégeant la bouche de décharge ( 17 , 17' ) et assurant l'étanchéité au niveau des portes.

On notera que les trois moyens de filtration (Figure 2) permettent d' obtenir au moins un dispositif apte à filtrer les liquides quelque soit la mise en place, plus ou moins horizontale d'une benne ainsi équipée.

Pour faciliter le pompage des jus, la cuve est équipée, au niveau des portes, d'une bouche ( 17 , 17') équipée d'une vanne, tandis qu'un tube d'évent (non représenté) émerge sensiblement à la verticale dans la largeur opposée de la cuve, pour faciliter la vidange et le nettoyage de la cuve après usage.

## Revendications

1. Dispositif de séparation et de collecte des liquides pour toute matière solide et liquide telle que, mais non exclusivement des marcs de raisins, des végétaux ayant tendance à foisonner, des boues ou tout autre matière pouvant présenter des risques pour l'environnement, formé d'une cuve de préférence métallique, incorporée dans une benne, destinée à être chargée et transportée par tout type de transport, **caractérisé en ce que** la dite cuve mobile ou fixe, comporte une enveloppe ( 26) formant un plancher ( 12) , un plafond ( 13), séparés par une gaine technique étanche ( 2) présentant des renforts ( 22 , 24), et **en ce que** la dite cuve comporte au moins un moyen de filtration ( 3) des matières solides et des liquides, tandis qu'un tuyau d'écoulement des liquides ( 21) muni d'un moyen d'obturation ( 32) permet de contenir les liquides collectés, en sorte de former un bac de rétention étanche, même lorsque la dite cuve présente une importante inclinaison.

2. Dispositif selon la revendication 1 **caractérisé en ce que** la gaine technique ( 2) étanche définit longitudinalement deux caissons ( 14 , 14'), communiquant entre eux par chacune de leur extrémité, en la partie avant ( 19) et en la partie arrière de la cuve ( 18), la dite gaine étant traversée par un tuyau d'écoulement ( 21) depuis le moyen de filtration ( 3) disposé transversalement, tandis que le tuyau d'écoulement présente une pente négative de la partie arrière ( 18) à la partie avant de la cuve ( 19), l'ouverture ( 23) débouchant à la partie avant de la dite cuve.

3. Dispositif selon la revendication 1 ou la revendication 2 **caractérisé en ce que** le moyen de filtration ( 3) chevauchant les deux caissons ( 14 , 14'), consiste en une goulotte ( 33) sur laquelle repose une grille amovible ( 31) présentant un ensemble de perforations, tandis que la goulotte étanche avec la cuve est sensiblement en forme d'entonnoir ( 33), comportant en son point bas une bouche ( 35) reliée par un tuyau de jonction verticale ( 34) au tuyau d'écoulement ( 21), alors qu'un profilé de couverture ( 4) positionné au dessus de la grille ( 31) , solidaire du plafond ( 13) de la cuve permet de retenir les matières solides et de drainer les liquides.

4. Dispositif selon l'une quelconque des revendications précédentes **caractérisé en ce que** le tuyau d'écoulement ( 21) et/ou le tuyau de jonction ( 34) comporte un moyen d'obturation ( 32) formé d'un clapet jumelé d'un flotteur ( 36) de densité inférieur à la densité du liquide contenu dans la cuve, apte à faire remonter le moyen d'obturation ( 32) et fermer la bouche ( 35), en sorte d'empêcher tout retour de liquide vers les matières solides stockées dans la benne

5. Dispositif selon la revendication 3 **caractérisé en ce que** le profilé de couverture ( 4 ) est de forme sensiblement convexe, comportant des arches ( 42) définissant un espace de drainage ( 43) des liquides, tandis que des moyen mâles ( 44) permettent d'encliqueter le dit profilé sur la grille ( 31) par des formes sensiblement complémentaires.

6. Dispositif selon l'une quelconque des revendications 1 , 2 ou 3 **caractérisé en ce que** la cuve comporte des renforts alvéolés ( 22 , 24) de préférence métallique, solidarisés verticalement entre le plancher ( 12) et le plafond ( 13) de la dite cuve, autorisant les flux.

7. Dispositif selon l'une quelconque des revendications 1 , 2 ou 3 **caractérisé en ce que** le plafond ( 13) de la partie arrière de la cuve ( 18) présente en porte-à-faux une console ( 16) créant un espace technique, en sorte de protéger une bouche de décharge ( 17, 17') équipée d'une vanne, tandis que la partie avant de la cuve ( 19) présente un évent démontable, disposé en élévation verticale sur la dite cuve.

8. Dispositif selon l'une quelconque des revendications précédentes **caractérisé en ce que** le plafond de la cuve ( 13), présente des moyens complémentaires d'étanchéité consistant en des volets obliques ( 15 , 15') complétés par un joint à lèvre ( 11 , 11') en appui contre les parois de la benne, présentant en leur base des trous oblongues permettant un ajustement latéral, tandis qu'au dessus du plafond ( 13 ) , la cuve comporte un plancher en caillebotis ( 37) destiné à supporter des contenants de produit corrosif ou dangereux.

9. Dispositif selon l'une quelconque des revendications précédentes **caractérisé en ce que** la cuve mobile présente une première enveloppe étanche ( 26) doubler d'une seconde enveloppe ( 26' ) également étanche, les deux enveloppes étant solidarisées entre elles par des entretoises ( 25 ), formant une cuve de rétention de sécurité, tandis que le moyen d'obturation consiste en une électrovanne commandée par l'opérateur.

10. Dispositif selon l'une quelconque des revendications précédentes **caractérisé en ce que** la cuve est réalisée en acier inoxydable, le plafond de la cuve comportant des anneaux de levage, tandis qu'au moins l'une des parois latérales d'une cuve mobile présente des rouleaux ou des patins à faible frottement, apte à favoriser la mise en place de la cuve à l'intérieur de la benne.

## Claims

1. Device of separation and collection of the liquids for any matter solid and liquid such as, grape marcs, the plants tending to abound, muds or any other matter being able to present risks for the environment, will be collected in a tank, preferably metal, incorporated in a container, intended to be loaded on a truck for its transport, **characterised in** the aforementioned mobile tank or fixes, comprises an envelope (26) forming a floor (12), a ceiling (13), separated by a tight service shaft (2) presenting reinforcements (22, 24), and in the ceiling of the aforesaid tank comprises a means of filtration (3) of the solid matters and liquids, while a drainage pipe of the liquids (21) provided with a means of obturation (32) allows to contain the collected liquids, forming a area of retention, which seals even when the aforementioned tank presents a prominent slope.

2. Device according to claim 1 **characterised** that the service shaft (2) defines two longitudinal boxes (14, 14 '), communicating between them by each end, in the part before (19) and in the back part of the tank (18), the aforementioned sheath being crossed by a drainage pipe (21) with the means of filtration (3) laid out transversely, while the drainage pipe presents a negative slope of the back part (18) at the tank (19), the opening (23) emerging with the front part of the aforesaid tank.

3. Device according to claim 1 or claim. 2 **characterised in** the means of filtration (3) overlapping the two boxes (14, 14 '), consists of a chute (33) on which there is a removable grid (31) presenting a series of perforations, while the tight chute of the tank is appreciably in the shape of funnel (33), comprising in its low point a mouth (35) connected by a pipe of vertical junction (34) to the drainage pipe (21), whereas a section of cover (4) positioned to the top of the grid (31), interdependent of the ceiling ( 13) of the tank make it possible to retain the solid matters and to drain the liquids.

4. Device according to any of the preceding claims **characterized in that** the pipe of junction (34) and/or the drainage pipe (21) comprise a means of obturation (32) formed of a twinned valve of a float (36) of density lower than the density of the liquid contained in the tank, ready to increase the means of obturation (32) and close the mouth (35), in kind to prevent any return of liquid towards the solid matters stored in the container.

5. Device according to claim 3 **characterized in that** the section of cover (4) is of an appreciably convex form, comprising arches (42) defining a space of drainage (43) for the liquids, while average males (44) make it possible to retain the k shaped grid (31) by appreciably complementary forms.

6. Device according to any of claims 1, 2 or 3 **characterised in** the tank comprises of the alveolate reinforcements (22, 24) preferably metal, solidarised vertically between the floor (12) and the ceiling (13) of the aforesaid the tank, authorising flows.

7. Device according to any of claims 1, 2 or 3 **characterised in that** the ceiling (13) of the back part of the tank (18) presents a cantilever console (16) creating a technical space, in kind to protect a mouth from discharge (17, 17 ') equipped with a valve, while the tank (19) presents a dismountable vent, laid on a vertical rise on the aforementioned tank.

8. Device according to any of the preceding claims **characterised in** the ceiling of the tank (13), presents a means complementary to sealing the oblique shutters (15, 15 ') supplemented by a lip seal (11, 11 ') to support the walls of the container, presenting the base of the oblong holes allowing a side adjustment, with with the top of the ceiling (13) the tank comprises a floor made of grating (37) intended to support containers of corrosive or dangerous substances.

9. The device according to any of the preceding claims **characterised in** the mobile tank presents a first envelope of seals (26) to holster the second envelope of seals (26 '), the two envelopes being solidarised between them by spacers (25), forming a tank of retention safety, while the means of obturation consists of an electromagnetic sluice gate ordered by the operator.

10. According to any of the preceding claims the tank is required to be made out of stainless steel, comprising a ceiling to the tank for the lifting rings, while one of the side walls of a mobile tank presents rollers or shoes to reduce friction, ready to support the installation of the tank inside the container.

## Patentansprüche

1. Vorrichtung der Trennung und der Sammlung der Flüssigkeiten für jedes feste und flüssige Material wie, Treber aber auch nicht ausschliesslich, generell ist es für Pflanzen geeignet, die auf einer natürlichen Weise in Fülle sind, oder auch für Schlämme oder jedes andere Material, die Risiken für die Umwelt darstellen können. Diese Vorrichtung besteht daraus :
Ein metallischer Behälter, der in einem Kübel eingegliedert ist, um den Transport zu ermöglichen.
Dieser Behälter, der befestigt oder beweglich ist, ist mit einer Hülle (26) ausgerüstet. Die Hülle hat ein Holzboden (12) und eine Decke (13), und dazwischen steht die verstärkte Hülle (22,24), die wasserdicht ist (2).
Die Decke dient zu der Filtrierung der festen und flüssigen Materialen (3), ein Rohr mit einer Abdichtungsklappe sperrt die gesammelten Flüssigkeiten, wie einen wasserdichten Zurückbehälter, selbst in schrägen Stellungen.

2. Vorrichtung nach Anspruch 1, **dadurch gekennzeichnet**, wird auch innerhalb der wasserdichten Hülle (2) durch 2 Kisten(14,14') ergänzt, die in der Länge liegen. Sie sind miteinander durch jedes ihres Endes verbunden (im Teil vor -19- und im Hinterteil (18). Die Hülle ist durch ein Absatzrohr (21) auch durchquert ; Absatzrohr, der von dem schräg liegenden Filtriermittel (3) herkommt, dies gibt einen negativen Abhang des Hinterteiles (18) bis zum Vorderteil (19) des Behälters, die Öffnung (23) liegt bei dem Vorderteil des Behälters.

3. Vorrichtung nach Anspruch 1 oder nach Anspruch 2, **dadurch gekennzeichnet**,
Das Filtriermittel (3), das die zwei Kisten überlappt (14,14') besteht in einer Wasserrinne (33) auf denen ein abnehmbares Gitter liegt. Das Gitter ist mit Löchern. Die wasserdichte Wasserrinne (33) hat ein Trichterform mit in seinem Tiefpunkt einen Mund (35) der mit einem vertikalen Rohr (34), die Flüssigkeiten bis zum Absatzrohr (21) führt.
Ein Deckenprofil (4), das über das Gitter liegt, und das an der Decke (31) des Behälters angehängt ist, hält die festen Materialen und Flussigkeiten zurück.

4. Vorrichtung nach irgendeinem der vorgehenden Ansprüche, **dadurch gekennzeichnet**, der Verbindungsrohr (34) und / oder der Absatzrohr (21) haben ein Abdichtungsmittel (32), das mit einem Klappenventil eines Schwimmers kombiniert ist.
Der Schwimmer hat eine Dichte niedriger als diejenige der Flüssigkeit, die im Behälter enthalten ist, dies erlaubt dem Abdichtungsmittel hinaufzugehen (32) und den Mund (35) zu schliessen, auf dieser Weise keine Flüssigkeitsrückkehr in Richtung der im Kübel gelagerten festen Materialen ist möglich.

5. Vorrichtung nach Anspruch 3, **dadurch gekennzeichnet**, über das Deckenprofil (4) : dieses ist von konvexer Form, mit Bögen, die einen Drainageraum der Flüssigkeiten zeichnen. Das Deckenprofil hat kleine (44) Eckpfeiler, die sich mit dem Gitter verschachteln.

6. Vorrichtung nach Anspruch 1, 2 oder nach Anspruch 3, **dadurch gekennzeichnet**, Der Behälter hat zellenförmige Verstärkungen (22,24), die verzugsweise auf Metal sein müssen, die zwischen dem Holzboden (12) und der Decke(13) vertical zusammenbefestigt sind, um die Flüssen zu erlauben.

7. Vorrichtung nach Anspruch 1, 2 oder nach Anspruch 3, **dadurch gekennzeichnet**, Die Decke (13) vom Hinterteil des Behälters (18) in überhang eine Konsole (16) schafft einen technischen Raum, um einen mit einem ausgerüsteten Schieber(17,17') Entladungsmund zu schützen.
Der Vorderteil des Behälters (19) stellt einen zerlegbaren Abzug, der sich vertikal über dem Behälter befindet.

8. Vorrichtung nach irgendeinem der vorgehenden Ansprüche, **dadurch gekennzeichnet**, Die Decke des Behälters (13) hat zusätzliche AbdichtungsMittel, die sich durch schrägen Abschnitten Teilen bezeichnen (15,15'), die selbst auch mit einer Lippendichtung (11, 11') in Unterstützung gegen die Wände des Kübels umgerahmt sind.
Die schrägen Abschnitten haben in ihrer Basis Löcher vor länglich, die eine seitliche Anpassung erlauben. Über der Decke (13) der Behälter, gibt es einen durchbrochenen gitterartigen Boden, der ätz oder gefährliche Mittel enthalten kann.

9. Vorrichtung nach irgendeinem der vorgehenden Ansprüche, **dadurch gekennzeichnet**, Der bewegliche Behälter stellt eine erste wasserdichte Hülle (26), die selbst auch durch eine zweite wasserdichteHülle (26')verdoppelt ist. Beide Hülle gehören zusammen und sind besfestigt durch Querstreben (25), die da auch einen Sicherheitszurückbehälter darstellt. Die Abdichtung des Systems ist ein Magnetventil, das bei dem Benutzer gesteuert wird.

10. Vorrichtung nach irgendeinem der vorgehenden Ansprüche, **dadurch gekennzeichnet**, Der Behälter ist aus Edelstahl. Die Decke des Behälters, die Heberinge besitzt. Mindestens eine der Seitenwand des beweglichen Behälters Rollen oder Sohle mit geringer Reibung hat, damit die Einführung des Behälters innerhalb des Kübels erleichtert wird.
